Europäisches Patentamt

**European Patent Office**

Office européen des brevets

(11) Veröffentlichungsnummer: **0 286 698**
**B1**

(12) **EUROPÄISCHE PATENTSCHRIFT**

(45) Veröffentlichungstag der Patentschrift:
13.09.89

(21) Anmeldenummer: **87105409.4**

(22) Anmeldetag: **11.04.87**

(51) Int. Cl.⁴: **B01J 39/04, B01J 49/00**

(54) Verfahren zur Entfernung von Schwermetall- und/oder Alkalimetall-Kationen aus wässrigen Lösungen mit Ionenaustauschermaterial.

(43) Veröffentlichungstag der Anmeldung:
**19.10.88 Patentblatt 88/42**

(45) Bekanntmachung des Hinweises auf die Patenterteilung:
**13.09.89 Patentblatt 89/37**

(84) Benannte Vertragsstaaten:
**AT BE CH DE FR GB LI NL**

(56) Entgegenhaltungen:
**EP-A- 0 056 850**
**DE-A- 2 714 297**
**GB-A- 1 166 151**
**GB-A- 1 576 100**
**US-A- 3 961 981**

(73) Patentinhaber: **KERNFORSCHUNGSZENTRUM KARLSRUHE GMBH, Weberstrasse 5 Postfach 3640, D-7500 Karlsruhe 1(DE)**

(72) Erfinder: **Höll, Wolfgang, Dr., Am Horbach 9, D-7505 Ettlingen(DE)**
Erfinder: **Eberle, Siegfried, Prof. Dr., Luisenstrasse 13, D-7514 Eggenstein(DE)**
Erfinder: **Horst, Jürgen, Eichelgasse 3, D-7500 Karlsruhe 41(DE)**

ACTORUM AG

**Beschreibung**

Die Erfindung betrifft ein Verfahren zur Entfernung von Schwermetall- und/oder Alkalimetall-Kationen aus wäßrigen Lösungen mit Ionenaustauschermaterial, das einen mit Erdalkalimetall-Ionen beladenen Kationenaustauscher enthält, und zur anschließenden Regeneration des beladenen oder erschöpften Ionenaustauschermaterials.

Zur Behandlung salzhaltiger wäßriger Lösungen aller Art werden in vielen Bereichen der chemischen Technik Ionenaustauscher mit Erfolg eingesetzt. Die Ionenaustauscher können keine Schadstoffe vernichten, sie sind aber z.B. in der Lage, Schadstoffe anzureichern, die in der Lösung in nur geringer Konzentration vorliegen, wie z.B. Schwermetalle. Die Ionenaustauscher erlauben es ferner, hygienisch nicht bedenkliche, den technischen Prozeß aber behindernde oder erschwerende Ionen durch andere Ionen zu ersetzen, die diese Eigenschaften nicht besitzen.

Die chemischen Umsetzungen an den Ionenaustauschern sind in der Regel reversibel. Dies bedeutet, daß die Richtung des Austauschs durch Zugabe geeigneter Chemikalien umgekehrt werden kann. Als Folge dieser Befähigung zur Regeneration können die Ionenaustauscherharze nahezu unbegrenzt oft wiederverwendet werden. Während der Regeneration fallen z.B. die in der Ursprungslösung nur gering konzentrierten Schadstoffe in konzentrierter Form an, in der sie besser beseitigt oder weiterverarbeitet werden können.

Stand der Technik der Entfernung von Schwermetallen aus verdünnten wäßrigen Lösungen ist der Einsatz konditionierter. d.h. ganz oder teilweise mit Natrium oder Calcium beladener Kationenaustauscher (LEWATIT®"Entfernung gelöster Schwermetall-Spuren aus neutralisiertem Misch-Abwasser durch LEWATIT-Ionenaustauscher" Technische Information, (1.8.1981) Bayer AG).

$$R = Na_2 + Cu^{2+} \rightarrow R = Cu + 2\ Na^+ (1)$$

Die Regeneration dieser Harze erfolgt üblicherweise in zwei aufeinanderfolgenden, getrennten Schritten. In einem ersten Schritt wird der erschöpfte Austauscher mit einer starken Mineralsäure in die freie Säureform überführt:

$$R = Cu + 2\ HCl \rightarrow R = H_2 + CuCl_2 (2)$$

Anschließend wird das Austauscherharz mit NaOH- oder $Ca(OH)_2$-Lösung konditioniert, d.h. in die gewünschte neutrale Salzform gebracht (2. Schritt):

$$R = H_2 + 2\ NaOH \rightarrow R = Na_2 + H_2O (3)$$

Als Folge des ersten Regenerationsschrittes gelangen zusätzliche Ionen in das Abwasser, sodaß eine Salzmenge beseitigt werden muß, die größer ist als die im Arbeitszyklus aus dem Rohwasser entfernte Menge.

Als Stand der Technik bei der Entfernung von Alkalimetallionen ist beispielsweise die Verminderung der Konzentration der Alkaliionen Natrium und Kalium in wäßrigen Zuckerlösungen mit Hilfe von Kationenaustauschern, die mit Calcium oder Magnesium beladen sind (F. Schneider: "Technologie des Zuckers", Verlag Schaper, Hannover, (1968), Kapitel 10 "Ionenaustausch", insbesondere S.609 - 629).

$$R = Mg + 2\ Na^+ \rightarrow R = Na_2 + Mg^{2+} (4)$$

Zur Regeneration wird in diesem Falle Magnesiumchlorid benutzt, wobei wiederum ein Bestandteil (hier die Chloridionen) nicht ausgenutzt wird und zu einer u.U. beträchtlichen Abwasserbelastung führen kann:

$$R = Na_2 + MgCl_2 \rightarrow R = Mg + 2\ NaCl (5)$$

Der Erfindung liegt nun die Aufgabe zugrunde, ein Verfahren zu schaffen, bei dem störende Kationen aus wäßrigen Lösungen mit Kationenaustauschern entfernt werden können, ohne daß mit der Regeneration gleichzeitig eine Aufsalzung des Abwassers verbunden ist.

Die Aufgabe wird erfindungsgemäß dadurch gelöst, daß zur Regeneration der beladene oder erschöpfte Kationenaustauscher entweder allein oder im Gemisch mit einem Anionenaustauscher mit einer wäßrigen Suspension schwerlöslicher Carbonate und/oder Hydroxide von Erdalkalimetallionen und/oder vollständig oder teilweise gebrannter, natürlicher Carbonate in Kontakt gebracht wird, und daß in die Suspension $CO_2$-haltiges Gas eingeleitet wird.

Als Ionenaustauschermaterial kann ein stark saurer Kationenaustauscher oder ein schwach saurer Kationenaustauscher oder ein Mischbett aus Anionen- und Kationenaustauschermaterial verwendet werden.

Eine vorteilhafte Ausbildung des erfindungsgemäßen Verfahrens ist dadurch gekennzeichnet, daß zur Regeneration des beladenen oder erschöpften Austauschers der $CO_2$-Partialdruck in der Suspension während des Einleitens des $CO_2$-haltigen Gases zwischen 0,1 und 10 bar liegt. Das $CO_2$-haltige Gas kann in die wäßrige Suspension schwerlöslicher Carbonate und/oder Hydroxide von Erdalkalimetallionen eingeleitet werden, bevor die Suspension mit dem beladenen oder erschöpften Ionenaustauschermaterial in Kontakt gebracht wird. Das $CO_2$-haltige Gas kann aber auch in die Suspension aus beladenem oder erschöpftem Ionenaustauschermaterial und Carbonaten und/oder Hydroxiden von Erdalkalimetallionen eingeleitet werden. Von besonderem Vorteil ist es, daß die Regeneration des beladenen oder erschöpften Kationenaustauschers sowohl die Elution der Schwermetall- und/oder Alkalimetall-Kationen als auch die Konditionierung des freien Austauschers in die mit Erdalkalimetallionen beladene Form zur Wiederverwendung umfaßt und in einem einzigen Verfahrensschritt durchgeführt wird.

Bei der Regeneration werden die zuvor aufgenommenen Metallionen wieder verdrängt und durch die

EP 0 286 698 B1

gewünschten Erdalkali-Ionen ersetzt. Soll das Austauscherharz beispielsweise von der Kupfer- in die Calciumform überführt werden, so wird aus einer $CaCO_3$-Suspension durch Einleiten von $CO_2$ eine $Ca(HCO_3)_2$-Lösung erzeugt:

$$CaCO_3 + CO_2 + H_2O \leftrightharpoons Ca(HCO_3)_2 \quad (6)$$

In Kontakt mit dem Austauscherharz nimmt der Austauscher Calcium auf und gibt Kupferionen ab:

$$R = Cu + Ca(HCO_3)_2 \rightarrow R = Ca + Cu(HCO_3)_2 \quad (7)$$

Die Konzentration der für die Regeneration erforderlichen Calciumionen kann dadurch noch erhöht werden, daß dem System ein Anionenaustauscherharz zugegeben wird. Bei Kontakt mit einer Kohlensäurelösung erhöht sich dadurch die Konzentration der Wasserstoffionen, so daß die Auflösung von $CaCO_3$ verbessert wird.

Vorteilhaft für die Durchführung der Regeneration in dem erfindungsgemäßen Verfahren ist die Überführung des vom Austauscher abgegebenen Schwermetalls in eine schwerlösliche Form (z.B. Malachit). Dadurch bleibt die Konzentration des Kupfers in der wäßrigen Lösung gering, so daß trotz der starken Affinität der Harze zu Kupfer ein für eine technische Nutzung ausreichender Regeneriereffekt erzielt wird.

Soll z.B. das zur Reinigung von Zuckerlösungen verwendete Austauscherharz von dem mit Alkaliionen beladenen Zustand in die Magnesium-Form gebracht werden, so wird in analoger Weise eine $Mg(OH)_2$-Suspension mit $CO_2$ gesättigt, eine $Mg(HCO_3)_2$-Lösung erzeugt und diese in Kontakt mit dem Austauscherharz gebracht:

$$Mg(OH)_2 + 2CO_2 \leftrightharpoons Mg(HCO_3)_2 \quad (8)$$
$$R = Na_2 + Mg(OH)_2 + 2 CO_2 \rightarrow R = Mg + 2 NaHCO_3 \quad (9)$$

In diesem Fall nimmt der Kationenaustauscher Magnesiumionen auf und gibt seine Alkaliionen ab. Vorteilhaft wirkt sich bei diesem Vorgang aus, daß schwach saure Austauscherharze eine ausgeprägt starke Affinität zu zweiwertigen Gegenionen aufweisen. Trotz der nur geringen Magnesiumkonzentration in der Lösung gelingt auf diese Weise eine praktisch vollständige Verdrängung der Alkaliionen vom Austauscher.

Das erfindungsgemäße Verfahren wird im folgenden anhand der Beschreibung einiger Beispiele in Verbindung mit den Figuren erläutert, jedoch ist das Verfahren nicht auf diese Fälle beschränkt.

Beispiel 1:

Wiederverwendbarkeit eines Kationenaustauschers, der zur Entfernung von Alkaliionen aus wäßrigen Lösungen benutzt worden war.

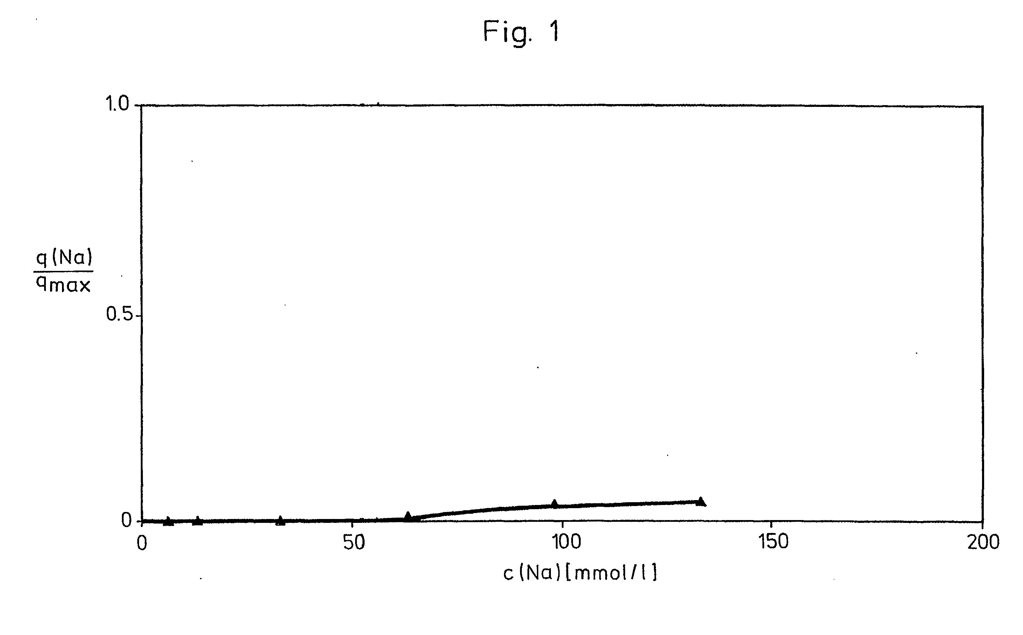

Fig. 1 zeigt die Gleichgewichtslage der durch die Gleichungen 8 und 9 formulierten Regeneration am Beispiel eines handelsüblichen schwach sauren Kationenaustauschers mit 3%iger $Mg(OH)_2$-Suspension bzw. $Mg(HCO_3)_2$-Lösung, der ursprünglich vollständig mit Natriumionen (beispielsweise aus einer Zuckerlösung) beladen war. Aufgetragen ist die Restbeladung des Austauschers mit Natrium (in Anteilen an der Gesamtkapazität

$$\frac{q(Na)}{q_{max.}}$$

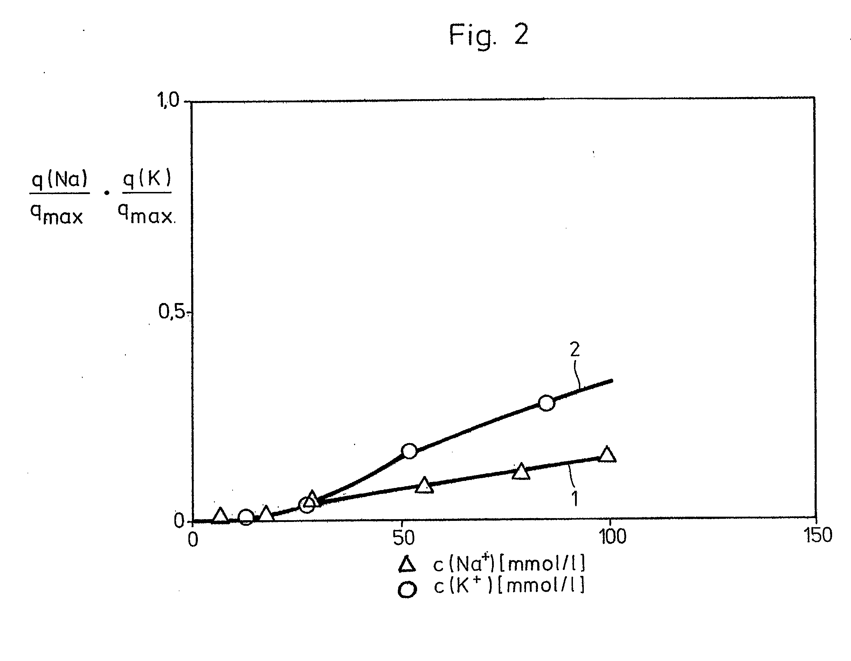

über der Natriumkonzentration in der Lösung ($c(Na)$ in mmol/l). Die Temperatur der Lösung während des Regeneriervorganges betrug 20°C. Wie die Figur zeigt, werden die Alkaliionen bis zu relativ hohen Konzentrationen vollständig verdrängt. Figur 2 zeigt analoge Gleichgewichtskurven für ein handelsübliches stark saures Austauscherharz, das ursprünglich mit Natrium- bzw. Kaliumionen beladen war und das bei 20° (Kurve 1, Harz in $Na^+$-Form) bzw. 60° C (Kurve 2, Harz in $K^+$-Form) regeneriert wurde.

Auch in diesem Fall gelingt eine nahezu vollständige Regeneration des Austauschers. Bei den Versuchen, deren Ergebnisse in Fig. 1 und 2 zusammengestellt sind, betrug der $CO_2$-Partialdruck jeweils 1 bar.

Beispiel 2:

Wiederverwendbarkeit eines regenerierten Ionenaustauscher-Materials.

Mit einer Mischung aus einem schwach sauren Kationenaustauscherharz und einem stark basischen Anionenaustauscherharz wurde die Entfernung von Kupfer aus einer Kupfersulfatlösung vorgenommen. Die Harzmischung bestand aus 600 ml Kationenaustauscher und 300 ml Anionenaustauscher. Der Kationenaustauscher war vor Beginn der Regenerierung vollständig mit Kupfer, der Anionenaustauscher vollständig mit Sulfat beladen. Die Mischung wurde in drei aufeinanderfolgenden Stufen bei 20° C mit je 900 ml einer 0,5 %igen $CaCO_3$-Suspension regeneriert, die bei einem $CO_2$-Partialdruck von 4 bar mit $CO_2$ gesättigt war. Das so regenerierte Ionenaustauscher-Material wurde erneut zur Kupfer-Entfernung eingesetzt. Das Ergebnis der nachfolgenden Kupferelimination aus einer wäßrigen Lösung ist in

3

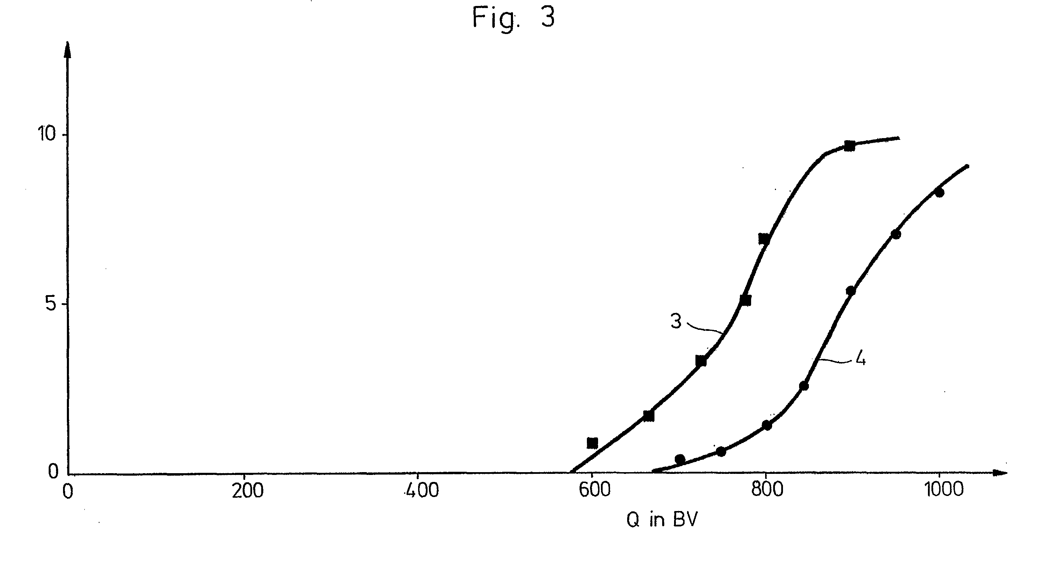

der Figur 3 eingetragen. Die Kurven 3 und 4 zeigen (die Unterschiede resultieren aus unterschiedlichen Regenerationsergebnissen), daß die Austauschermischung in der Lage ist, aus einer $CuSO_4$- Lösung mit 10 mg/l Kupfer dieses über eine Laufzeit von etwa 700 Bettvolumina (=700 X 900 ml der Cu enthaltenden Lösung) vollständig zu entfernen. Weitere Verbesserungen der Laufzeit sind bei einer Optimierung des erfindungsgemäßen Verfahrens zu erwarten.

Beispiel 3:

Mit einem stark sauren Kationenaustauscherharz (mit der Handelsbezeichnung Amberlite® 252 ZU) wurde die Entfernung von Alkaliionen aus einer konzentrierten Lösung mit je 100 mmol/l NaCl und KCl untersucht. Lösungen solcher Konzentrationen treten bei der Zuckerbehandlung auf. Nach der Beladung des Austauscherharzes wurde der Austauscher zur Regeneration mit 11 Bettvolumina einer 3%igen $Mg(OH)_2$-Suspension behandelt, die bei 7 bar mit $CO_2$ gesättigt war. Die Temperatur betrug 20°C.

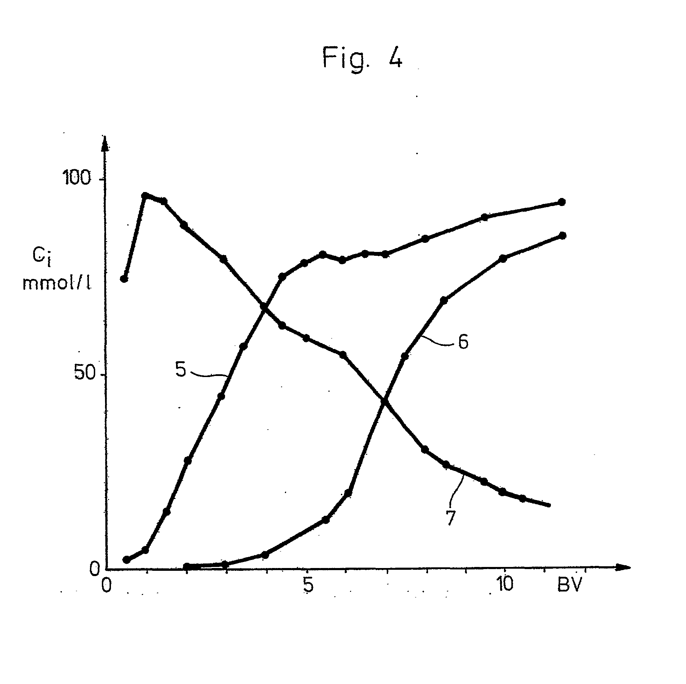

In der durchgesetzten Regenerierlösung betrug die Natriumkonzentration 75 mmol/l und die Kaliumkonzentration 105 mmol/l. Die Ergebnisse der anschließenden Eliminationsphase (Entfernung von $Na^+$ bzw. $K^+$ aus wäßriger Lösung) sind in Figur 4 eingetragen. Der Durchsatz betrug hierbei 1 Bettvolumen/Stunde. Die Durchbruchskurven für Natrium (Kurve 5) und für Kalium (Kurve 6) zeigen, daß beide Ionen anfänglich fast vollständig eliminiert werden. Entsprechend der größeren Bevorzugung erfolgt der Durchbruch der Kaliumionen erst nach einem größeren durchgesetzten Gesamtvolumen. Die Restbeladung des Harzes mit $Mg^{++}$ im Verlauf der Alkaliaufnahme zeigt Kurve 7.

**Patentansprüche**

1. Verfahren zur Entfernung von Schwermetall- und/oder Alkalimetall-Kationen aus wäßrigen Lösungen mit Ionenaustauscher-Material, das einen mit Erdalkalimetall-Ionen beladenen Kationenaustauscher enthält, und zur anschließenden Regeneration des beladenen oder erschöpften Ionenaustauschermaterials, dadurch gekennzeichnet, daß
zur Regeneration der beladene oder erschöpfte Kationenaustauscher entweder allein oder im Gemisch mit einem Anionenaustauscher mit einer wäßrigen Suspension schwerlöslicher Carbonate und/oder Hydroxide von Erdalkalimetallionen und/oder vollständig oder teilweise gebrannter, natürlicher Carbonate in Kontakt gebracht wird, und daß in die Suspension $CO_2$-haltiges Gas eingeleitet wird.

2. Verfahren nach Anspruch 1, dadurch gekennzeichnet, daß ein stark saurer Kationenaustauscher verwendet wird.

3. Verfahren nach Anspruch 1, dadurch gekennzeichnet, daß ein schwach saurer Kationenaustauscher verwendet wird.

4. Verfahren nach Anspruch 1, dadurch gekennzeichnet, daß ein Mischbett aus Anionen- und Kationenaustauschermaterial verwendet wird.

5. Verfahren nach Anspruch 1, dadurch gekennzeichnet, daß der $CO_2$-Partialdruck in der Suspension während des Einleitens des $CO_2$-haltigen Gases zwischen 0,1 und 10 bar liegt.

6. Verfahren nach Anspruch 1, dadurch gekennzeichnet, daß das $CO_2$-haltige Gas in die wäßrige Suspension schwerlöslicher Carbonate und/oder Hydroxide von Erdalkalimetallionen eingeleitet wird, bevor die Suspension mit dem beladenen oder erschöpften Ionenaustauschermaterial in Kontakt gebracht wird.

7. Verfahren nach Anspruch 1, dadurch gekennzeichnet, daß das $CO_2$-haltige Gas in die Suspension aus beladenem oder erschöpftem Ionenaustauschermaterial und Carbonaten und/oder Hydroxiden von Erdalalkalimetallionen eingeleitet wird.

8. Verfahren nach Anspruch 1, dadurch gekennzeichnet, daß die Regeneration des beladenen oder erschöpften Kationenaustauschers sowohl die Elution der Schwermetall- und/oder Alkalimetall-Kationen als auch die Konditionierung des freien Austauschers in die mit Erdalkalimetallionen beladene Form zur Wiederverwendung umfaßt und in einem einzigen Verfahrensschritt durchgeführt wird.

**Claims**

1. Process for removing heavy metal and/or alkali metal cations from aqueous solutions by means of an ion exchange material, which contains a cation exchanger charged with alkaline-earth metal ions, and for subsequently regenerating the charged or exhausted ion exchange material, characterised in that, for regeneration purposes, the charged or exhausted cation exchanger is brought into contact, either on its own or combined with an anion exchanger, with an aqueous suspension of difficulty soluble carbonates and/or hydroxides of alkaline-earth metal ions and/or natural carbonates which have been wholly or partially burned, and in that $CO_2$-containing gas is introduced into the suspension.

2. Process according to claim 1, characterised in that a strongly acidic cation exchanger is used.

3. Process according to claim 1, characterised in that a weakly acidic cation exchanger is used.

4. Process according to claim 1, characterised in that a mixed bed of anion and cation exchange material is used.

5. Process according to claim 1, characterised in that the $CO_2$ partial pressure in the suspension lies between 0.1 and 10 bars during the introduction of the $CO_2$-containing gas.

6. Process according to claim 1, characterised in that the $CO_2$-containing gas is introduced into the aqueous suspension of difficulty soluble carbonates and/or hydroxides of alkaline-earth metal ions before the suspension is brought into contact with the charged or exhausted ion exchange material.

7. Process according to claim 1, characterised in that the $CO_2$-containing gas is introduced into the suspension of charged or exhausted ion exchange material and carbonates and/or hydroxides of alkaline-earth metal ions.

8. Process according to claim 1, characterised in that the regeneration of the charged or exhausted cation exchanger includes both the elution of the heavy metal and/or alkali metal cations and the conditioning of the free exchanger into the form, charged with alkaline-earth metal ions, for re-use and is effected in one single process step.

**Revendications**

1. Procédé pour l'élimination de cations de métaux alcalins et/ou de métaux lourds hors de solutions aqueuses, à l'aide d'une substance échangeuse d'ions qui contient un échangeur de cations chargé d'ions alcalino-terreux, et pour la régénérateur subséquente de la substance échangeuse d'ions chargée ou épuisée, caractérisé en ce que pour la régénération, on met l'échangeur de cations chargé ou épuisé, soit seul, soit en mélange avec un échangeur d'anions, en contact avec une suspension aqueuse d'hydroxydes et/ou de carbonates peu solubles d'ions alcalino-terreux et/ou de carbonates naturels totalement ou partiellement calcinés, peu solubles, et en ce que du gaz contenant du $CO_2$ est envoyé dans la suspension.

2. Procédé selon la revendication 1, caractérisé en ce que l'on utilise un échangeur de cations fortement acide.

3. Procédé selon la revendication 1, caractérisé en ce que l'on utilise un échangeur de cations faiblement acide.

4. Procédé selon la revendication 1, caractérisé en ce que l'on utilise un lit mixte constitué d'une substance échangeur d'anions et d'une substance échangeuse de cations.

5. Procédé selon la revendication 1, caractérisé en ce que, pendant l'introduction du gaz contenant du $CO_2$, la pression partielle du $CO_2$ dans la suspension est comprise entre 0,1 et 10 bars.

6. Procédé selon la revendication 1, caractérisé en ce que l'on introduit le gaz contenant du $CO_2$ dans la suspension aqueuse de carbonates et/ou hydroxydes peu solubles d'ions alcalino-terreux, avant de mettre la suspension en contact avec la substance échangeuse d'ions chargée ou épuisée.

7. Procédé selon la revendication 1, caractérisé en ce que l'on introduit le gaz contenant du $CO_2$ dans la suspension constituée de substance échangeuse d'ions chargée ou épuisée, et de carbonates et/ou d'hydroxydes d'ions alcalino-terreux.

8. Procédé selon la revendication 1, caractérisé en ce que, pour la réutilisation, la régénération de l'échangeur de cations chargé ou épuisé comprend non seulement l'élution des cations de métaux lourds et/ou de métaux alcalins, mais également le traitement de l'échangeur libre pour le mettre sous la forme chargée avec des ions alcalino-terreux, et est effectuée en une seule étape de processus.

## Fig. 1

EP 0 286 698 B1

Fig. 2

EP 0 286 698 B1

Fig. 3

EP 0 286 698 B1

Fig. 4